# EUROPÄISCHE PATENTANMELDUNG

(11) **EP 2 713 087 A2**
(43) Veröffentlichungstag der Anmeldung: **02.04.2014**
(21) Anmeldenummer: 13185937.3
(22) Anmeldetag: 25.09.2013
(51) Int. Cl.: F16L 19/025

(54) **Rohrverbindung**

(30) Priorität: 26.09.2012 DE 202012103695 U
(71) Anmelder: DILO Armaturen und Anlagen GbmH, 87727 Babenhausen (DE)
(72) Erfinder: Sieber, Peter, 89281 Altenstadt (DE); Kohler, Robert, 89297 Messhofen (DE); Knoll, Werner, 89293 Kellmünz (DE)
(74) Vertreter: Baumann, Rüdiger Walter

(57) **Zusammenfassung**

Die Erfindung betrifft eine Rohrverbindung, bestehend aus einem Rohranschlussstück 2 und einem Rohr 3, dessen Endbereich 30 in eine Ausnehmung 20 des Rohranschlussstücks 2 einsteht und wobei das Rohr 3 und das Rohranschlussstück 2 durch eine Schraubverbindung 4 lösbar fest miteinander verbindbar sind, wobei in der Ausnehmung 20 an dem Rohranschlussstück 2 eine Ringnut 51 oder Ringfeder 50 vorgesehen ist, die mit einer an dem in dem Rohranschlussstück 2 einstehenden Rohrendbereich 30 angeordneten Ringfeder 50 oder Ringnut 51 bei insbesondere fest verbundener Schraubverbindung 4 abdichtend zusammenwirkt.

## Beschreibung

Die Erfindung betrifft eine Rohrverbindung, bestehend aus einem Rohranschlussstück und einem Rohr, welche durch eine Schraubverbindung lösbar fest miteinander verbindbar sind.

Erfindungsgemäße Rohrverbindungen sind im Stand der Technik weit verbreitet. Wichtiges Kriterium der Rohrverbindung ist, dass diese eine dichte und damit zuverlässige Verbindung des Rohrs mit dem Rohranschlussstück bildet. Hierzu sind mehrere Konzepte bekannt. So wird zum Beispiel zwischen dem Rohranschlusstück und dem Rohr eine aus Elastomer gebildete Dichtung angeordnet und die Schraubverbindung, die eine axiale Kraft des Rohrs in Richtung des Rohranschlusstücks bewirkt, komprimiert die Dichtung derart, dass eine dichte Verbindung entsteht. Es gibt aber Anwendungsfälle, wo der Einsatz von Elastomeren als Dichtungsmaterial unerwünscht ist, also auf eine dichtungslose Variante umzustellen ist. Hier sind Anwendungsfälle bekannt, bei welchen das stumpf aneinander stoßende Rohr und Rohranschlussstück hochexakt zu bearbeiten sind, damit die Stirnfläche des Rohrs leckagefrei an der entsprechenden Anlagefläche des Rohranschlussstücks anliegt. In solchen Fällen wird dabei die Schraubverbindung durch eine Überwurfmutter realisiert, welche auf dem Rohr eingesteckt ist und wobei das Rohrende zum Beispiel einen aufgepressten Flansch aufweist, an dessen Rücken in axialer Richtung (bezogen auf die Rohrlängsachse) die Überwurfmutter angreift und auf ein Außengewinde an dem Rohranschlussstück aufgeschraubt wird. Es besteht nun das Risiko, dass Kippmomente gerade im Rohrendbereich auftreten, die höchst schädlich für die fragile Dichte der Rohrverbindung sind.

Die Erfindung hat sich daher zur Aufgabe gemacht, die eingangs beschriebene Rohrverbindung zuverlässiger zu gestalten und dadurch insbesondere zumindest einen der vorgenannten Nachteile zu vermeiden.

Zur Lösung dieser Aufgabe geht die Erfindung aus von einer Rohrverbindung und schlägt vor, dass diese aus einem Rohranschlussstück und einem damit verbindbaren Rohr besteht, dessen Endbereich in eine Ausnehmung des Rohranschlussstücks einsteht und das Rohr und das Rohranschlussstück durch eine Schraubverbindung lösbar fest miteinander verbindbar sind, wobei in der Ausnehmung eine Ringnut oder Ringfeder vorgesehen ist, die mit einer an dem in dem Rohranschlussstück einstehenden Rohrendbereich angeordneten Ringfeder oder Ringnut bei insbesondere fest verbundener Schraubverbindung abdichtend zusammenwirkt.

Der Pfiff der Erfindung liegt in der geschickten Kombination zweier Maßnahmen, die überraschenderweise einen synergistischen Effekt ergeben. Das in die Ausnehmung des Rohranschlussstücks einstehende Rohr wird auf einem axial längeren Bereich geführt und - je nachdem wie gut die Passung zwischen der Ausnehmung und dem Rohr gearbeitet ist - auch vor Kippmomenten, die die Rohrstirnfläche von der damit zusammenwirkenden Anlagefläche des Rohranschlussstücks abzuheben drohen, geschützt.

Zusätzlich wird ein Nut-Federkonzept für die Ausbildung einer Dichtung vorgeschlagen, wobei zu beachten ist, dass die bei Einsatz der Schraubverbindung axial wirkenden Kräfte (bezogen auf die Längsachse des Rohrs) zu einem erheblichen Pressdruck der Ringfeder auf den Anlagelinien der Nutwand der Ringnut führen und so gegebenenfalls auch eine Materialverformung bewirken und somit eine sichere dichte Verbindung zur Verfügung stellen.

Neben dem Vorzug, dass das in das Rohranschlussstück einstehende Rohr über eine größere axiale Länge eine Führung erfährt, ergibt sich auch der Vorteil, dass in dem jetzt nicht mehr stumpf anschließenden Verbindungsbereich, sondern in dem Überlappungsbereich die Möglichkeit eröffnet ist, zusätzliche Dichtungen anzuordnen, die zum Beispiel in dem radialen Zwischenraum zwischen Rohr und Rohranschlussstück angeordnet sind. Es kann sich hierbei zum Beispiel um eine Dichtung aus Elastomer, aber auch aus metallischen Werkstoffen handeln.

Als Rohrendbereich wird dabei der Endbereich des Rohrs bezeichnet, der zumindest in das Rohranschlussstück einsteht und darüber hinaus (alternativ) auch noch von Mitteln der Schraubverbindung in axialer Länge ebenfalls überdeckt wird.

Das erfindungsgemäße Konzept führt im Rohrendbereich zu einer hohen Stabilität, hierzu wirkt auch das Mittel der Schraubverbindung mit.

Gemäß der Erfindung bestehen für die Ausgestaltung der Schraubverbindung mehrere Varianten, wobei die nachfolgenden Ausführungsbeispiele die Möglichkeiten der Ausbildung der Schraubverbindung nicht abschließend festlegen.

In einer ersten Variante ist dabei als Schraubverbindung eine auf dem Rohr aufsteckbare, eine Durchdringungsöffnung besitzende Befestigungsschraube vorgesehen, die mit einem in der Ausnehmung vorgesehenen Innengewinde zusammenwirkt, wobei das Rohr, inbesondere der Rohrendbereich, eine Ringwulst aufweist, an der die Befestigungsschraube bei aktiver Schraubverbindung (in axialer Richtung, zur Ausnehmung hin) anliegt und wobei die Schraubverbindung eine axiale Kraft zwischen dem Rohreinsteckstutzen und dem Rohr bewirkt. Die Ausnehmung wird zum Beispiel durch eine Bohrung, insbesondere eine Stufen- beziehungsweise Sacklochbohrung ausgeführt. In der Ausnehmung können axial verlaufende oder auch schräg beziehungsweise rechtwinklig anschließende Querbohrungen abzweigen und für eine Weiterführung des Mediums sorgen. Geschickterweise ist in dem Bereich, in dem das Rohr in die Ausnehmung einsteht, eine konzentrische zylindrische Ausnehmungswand vorgesehen, die insbesondere ein Innengewinde trägt und mit dem Außengewinde der Befestigungsschraube zuverlässig zusammenwirkt. In diesem Ausführungsbeispiel wird klar, dass die Befestigungsschraube von außerhalb des Rohranschlussstücks zugängig bleibt und daher in diesem Bereich die Befestigungsschraube auf dem Rohr aufgesteckt ist und diese ebenfalls stützt beziehungsweise aussteift und so das in die Ausnehmung einstehende Stück des Rohrs auf einem weiteren axialen Bereich, der hier auch als Rohrendbereich (alternativ) definiert ist, unterstützt.

Alternativ umfasst der Vorschlag auch eine Anordnung, bei der die Schraubverbindung als eine auf dem Rohr oder dem Rohranschlussstück aufgesteckte Überwurfmutter vorgesehen ist, wobei das Rohr oder das Rohranschlussstück ein mit dem Gewinde der Überwurfmutter zusammenwirkendes Außengewinde trägt, das Rohranschlussstück oder das Rohr eine Anlagewulst aufweist, an die die Überwurfmutter bei aktiver Schraubverbindung anliegt und die Schraubverbindung eine axiale Kraft zwischen dem Rohranschlussstück und dem Rohr bewirkt. Der Einsatz einer (natürlich drehbaren) Überwurfmutter ist erfindungsgemäß somit in zwei Varianten möglich.

Bei der ersten Variante ist die Überwurfmutter auf dem Rohr angeordnet und wirkt mit einem am Rohrendbereich vorgesehenen Anlagewulst formschlüssig haltend zusammen, wobei dann das Rohranschlussstück das Außengewinde trägt. In der zweiten Variante ist das Außengewinde auf dem Rohr aufgeschnitten, das gegebenenfalls einen entsprechenden verbreiterten Wulst oder Endbereich aufweist, wo das Außengewinde angeordnet ist, und die Überwurfmutter befindet sich auf dem Rohranschlussstück und ist dort drehbar gehalten, aber axial durch einen Anlagewulst festlegbar.

Neben diesen Varianten, bei welchen mit einem separaten Element die Schraubverbindung realisiert wird, ist natürlich des weiteren eine Variante möglich, wobei als Schraubverbindung auf dem Rohr ein mit dem Innengewinde des Rohranschlussstücks zusammenwirkendes Außengewinde vorgesehen ist. Durch das direkte Einschrauben des Rohrendbereichs in das Rohranschlussstück wird ein sehr lagestabiler Verbund erreicht.

Vorteilhafterweise wirkt die in einer erfindungsgemäßen Variante vorgesehene Befestigungsschraube auf eine im Rohrendbereich angeordnete Ringwulst. Der Außendurchmesser der Ringwulste ist dabei größer als der Rohrdurchmesser, wobei die Anordnung so gewählt ist, dass sich eine ausreichende Passung der Ringwulste in der (zum Beispiel als zylindrische Bohrung ausgeführten) Ausnehmung ergibt. Hier nun besteht die Möglichkeit, an der in die Ausnehmung einstehenden Ringwulst eine Umfangsnut anzuordnen, die zur Anordnung oder Aufnahme einer O-Ringdichtung oder einer anderen Dichtung dient.

In einer bevorzugten Variante des Vorschlages weist die Ausnehmung einen Ringabsatz auf, dessen Ringfläche die Ringnut oder die Ringfeder trägt. Für die Ausgestaltung des Ringabsatzes in der Ausnehmung bestehen mehrere Varianten wie beispielsweise eine Sacklochbohrung oder eine Stufenbohrung.

Günstigerweise ist die Ausnehmung als eine das Rohranschlussstück durchdringende Durchdringungsöffnung ausgebildet, wobei die Durchdringungsöffnung zumindest einen Ringabsatz aufweist, dessen Ringfläche die Ringnut oder die Ringfeder trägt.

Die Ausgestaltung der Ausnehmung beziehungsweise des Rohranschlussstücks ist sehr variabel. Bezüglich der Herstellung ist es natürlich günstig, die Durchdringungsöffnung mit einem Bearbeitungsschritt (z.B. Zerspanung) herzustellen, wobei dann das Bearbeitungswerkzeug entsprechende Absätze aufweist, die zu entsprechenden Ringabsätzen in der Durchdringungsöffnung führen. Hierauf ist die Erfindung jedoch nicht beschränkt, sondern die Erfindung umfasst auch Lösungen, bei welchen die Durchdringungsöffnung komplexer ausgebildet ist und zum Beispiel in mehreren Arbeitsschritten in das Rohranschlussstück eingearbeitet wird. Dabei bezieht sich der Begriff "Durchdringungsöffnung" auch auf eine Kombination mehrerer nacheinander hergestellter Kanäle. So ist zum Beispiel die Ausnehmung bevorzugt als (Sackloch-) Bohrung oder Stufenbohrung ausgeführt, die in einem Bearbeitungsschritt auch das Rohranschlussstück zu durchdringen vermag oder aber in der Ausnehmung endet winklig anschließend ein weiterer Querkanal oder eine Bohrung. Daher beschränkt die Anmeldung den Begriff "Ausnehmung" nicht auf eine spezielle geometrische Variante.

Günstigerweise ist in der Ausnehmung beziehungsweise in der die Ausnehmung bildenden Durchdringungsöffnung ein Ringabsatz vorgesehen, dessen Ringfläche die Ringnut oder die Ringfeder trägt beziehungsweise aufnimmt. Dabei ist zu beachten, dass der Begriff "Ringfläche" sich im Anwendungsbereich der Erfindung nicht auf eine rotationssymmetrische Ausgestaltung beschränkt, sondern auch zum Beispiel elliptische Ringflächen umfasst. Hierdurch wird zum Beispiel auch eine lagefixierte Anordnung des Rohrs in dem Rohranschlussstück realisierbar.

Des weiteren ist vorgesehen, dass in der Zylinderwand der Ausnehmung eine Umfangsnut vorgesehen ist, die der Aufnahme einer Dichtung, zum Beispiel einer O-Ringdichtung oder einer Metalldichtung oder ähnliches, dient. Grundsätzlich ist es möglich, mit dem erfindungsgemäßen Konzept mehrere Dichtungen (in axialer Richtung) hintereinander anzuordnen und so eine erhebliche Verbesserung der Dichtheit der erfindungsgemäßen Rohrverbindung zu erreichen.

Das Rohr trägt, bevorzugt im Rohrendbereich, alternativ auch an der das Rohrende abschließenden ringartigen Stirnfläche, die Ringfeder oder die Ringnut. Diese wirkt zusammen mit dem korrespondierenden Element, der Ringnut oder der Ringfeder, die an geeigneter Stelle in der Ausnehmung des Rohranschlussstücks vorgesehen ist. Für die Anordnung der Elemente gibt es erfindungsgemäß mehrere Varianten.

Neben dem Vorschlag, dass die ringartige Stirnfläche an dem Rohrende die Ringfeder beziehungsweise die Ringnut trägt, ist alternativ vorgesehen, dass der Rohrendbereich eine Einschnürung aufweist, die eine zum Rohrende hin gerichtete Ringfläche bildet, welche die Ringfeder oder Ringnut trägt. Geschickterweise liegt dann auch diese an der Einschnürung angeordnete Ringfläche auf dem Ringabsatz der Ausnehmung auf.

Bevorzugterweise schließt sich an dem Rohrendbereich, an der Einschnürung, in Richtung des Rohrendes ein Rohrüberstand an. Dieser Rohrüberstand verlängert den Einstand des Rohrs in das Rohranschlussstück und dient somit zusätzlich der Lagestabilität, insbesondere wenn eine entsprechend genaue Passung des Überstands in dem Bereich der Ausnehmung beziehungsweise Durchdringungsöffnung vorgesehen ist. Auch ist es möglich, in dem zylindrischen Bereich des Rohrüberstands zusätzliche Dichtmaßnahmen vorzusehen, auch die Stirnfläche, welche den Rohrüberstand und somit das Rohr begrenzt, ist für die Realisierung einer Dichtung in Form einer Nut- und Federabdichtung geeignet und ist als weitere Variante von dem Vorschlag umfasst.

Der erfindungsgemäße Vorschlag sieht vor, dass das Rohranschlussstück als Rohreinsteckstutzen ausgebildet ist, ohne hierauf die Erfindung zu beschränken. Es ist auch möglich, das Rohranschlussstück zum Beispiel als Rohr, als Stutzen, als Verbindungsstück oder ähnliches auszubilden.

In der Zeichnung ist die Erfindung insbesondere in einem Ausführungsbeispiel schematisch dargestellt. Es zeigen:
- Fig. 1: in einer Schnittdarstellung die erfindungsgemäße Rohrverbindung,
- Fig. 2a: in einer Schnittdarstellung das Rohr gemäß der erfindungsgemäßen Ausgestaltung,
- Fig. 2b: das Rohranschlussstück in einer Schnittdarstellung entsprechend der Erfindung,
- Fig. 2c: ein Detail aus Fig. 2 b.

In den Figuren sind gleiche oder einander entsprechende Elemente jeweils mit den gleichen Bezugszeichen bezeichnet und werden daher, sofern nicht zweckmäßig, nicht erneut beschrieben.

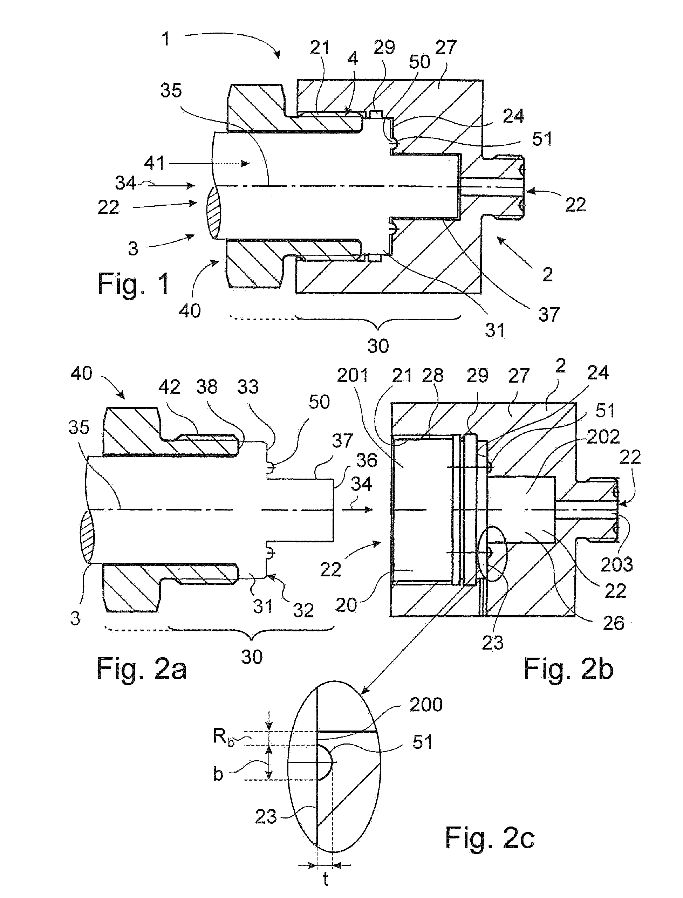

In Fig. 1 ist die erfindungsgemäße Rohrverbindung 1 in der Gebrauchsstellung, insbesondere bei aktiver Schraubverbindung 4 gezeigt. Die Rohrverbindung 1 besteht dabei aus einem Rohranschlussstück 2, das in dem hier gezeigten Ausführungsbeispiel als Rohreinsteckstutzen 27 ausgebildet ist. Des weiteren umfasst die Rohrverbindung 1 ein Rohr 3, dessen Endbereich 30 in eine Ausnehmung 20 des Rohranschlussstücks 2 einsteht. Es ist eine Schraubverbindung 4 vorgesehen, die eine einerseits feste, andererseits aber auch lösbare Verbindung zwischen dem Rohr 3 und dem Rohranschlussstück 2 zur Verfügung stellt. In dem hier gezeigten Ausführungsbeispiel ist die Schraubverbindung 4 durch eine Befestigungsschraube 40 gebildet, die auf das Rohr 3, insbesondere in dessen Endbereich aufgesetzt ist. Die Befestigungsschraube 40 ist durch ein Außengewinde 42 gekennzeichnet, das mit dem Innengewinde 21 des Rohranschlussstücks 2 (dieses befindet sich an der Zylinderwand 28 der Ausnehmung 20) haltend eingreift. Die Einsteckrichtung 34 des Rohrs 3 in das Rohranschlussstück 2 entspricht (ist parallel) der Rohrachse 35.

Senkrecht zur Rohrachse 35 besitzt das Rohr 3, insbesondere in seinem in den Rohranschlussstück 2 einstehenden Rohrendbereich 30, Ringflächen 33. Hierzu zählt grundsätzlich auch der stirnseitige Abschluss 36 des Rohrs 3. Auf diesen, zur Einsteckrichtung 34 beziehungsweise zur Rohrachse 35 senkrecht orientierten, bevorzugten ringförmigen Flächen ist zumindest ein Element der Dichtungsanordnung angeordnet. Die Dichtungsanordnung umfasst dabei einerseits Ringfeder 50 und andererseits Ringnut 51. Dabei ist die Anordnung so gewählt, dass das Rohr 3 an geeigneter Stelle ein erstes Dichtungselement, zum Beispiel die Ringfeder 50, trägt und das Rohranschlussstück 2 an einer geeigneten Stelle, bevorzugt an einer Fläche, die ebenfalls rechtwinklig zur Rohrachse 35 orientiert ist, eine Ringnut 51 aufweist, die in zusammengebauter Stellung beziehungsweise bei aktiver Schraubverbindung 4 dichtend miteinander korrespondieren und zusammenwirken. Das Dichtungskonzept ist dabei auch umkehrbar, das heißt es ist auch möglich, an Stelle der Ringfeder 50 an dem Rohr 3 auch die Ringnut 51 vorzusehen und dann konsequenterweise die Ringfeder 50 im Bereich der Ausnehmung 20, an geeigneter Stelle, anzuordnen.

In Fig. 2b ist das Rohranschlussstück 2, welches hier insbesondere als Rohreinsteckstutzen 27 ausgebildet ist, als Detail gezeigt. Das Rohranschlussstück 2 besitzt eine Ausnehmung 20, die als Durchdringungsöffnung 22 in axialer Richtung (bezogen auf die Rohrachse 35) das gesamte Rohranschlussstück 2 durchdringt. Dabei bilden sich in der Ausnehmung 20 mehrere, in dem hier gezeigten Ausführungsbeispiel drei, Bereiche mit jeweils unterschiedlichen Durchmessern aus, wobei - in Einsteckrichtung 34 gesehen - sich die Durchmesser der einzelnen Bereiche im wesentlichen verringern, ohne aber die Erfindung hierauf zu beschränken. Die Ausnehmung 20 beziehungsweise die Durchdringungsöffnung 22 ist als Bohrung ausgebildet, wobei sich an den Übergängen der verschiedenen Durchmesser entsprechende Ringabsätze 23 bilden, die als Dichtfläche oder als Element zum Aufnehmen von Dichtelementen dienen.

In Einsteckrichtung 34 gesehen, ist der erste Bereich 201 der Ausnehmung 20 mit dem größten Durchmesser vorgesehen. Die die Ausnehmung 20 begrenzende Zylinderwand 28 besitzt hier ein Innengewinde 21, das Teil der Schraubverbindung 4 ist und mit dem Außengewinde 42 der Befestigungsschraube 40 zusammenwirkt. Nach einem Freischnitt des Gewindes 21 schließt sich, nach einem kleinen Ring, in dem ersten Bereich 201, eine Umfangsnut 29 an, die zur Aufnahme einer Dichtung (hier nicht gezeigt), zum Beispiel einer O-Ringdichtung aus elastischem Material oder auch einer aus Metall bestehenden Dichtung, dient.

Der erste Bereich 201 wird, in Einsteckrichtung 34 gesehen, von dem Ringabsatz 23 begrenzt, es schließt sich dann der zweite (oder auch mittlere) Bereich 202 an, in den der Rohrüberstand 37 des Rohrs 3 eintaucht. Auch der zweite Bereich 202 ist als Stufenbohrung ausgebildet und wird durch einen Ringabsatz 26 in Einsteckrichtung 34 rückseitig begrenzt. Als dritter Bereich 203 schließt sich in Einsteckrichtung 34 nach dem zweiten Bereich 202 ein Anschlusskanal 203 an, der in einen Anschlussbereich mündet, mit dem das Rohranschlussstück 2 bzw. der Rohreinsteckstutzen 27 mit einem weiteren, das Medium leitenden Rohrsystem verbindet. Die hier gezeigten drei Bereiche 201, 202, 203 sind jeweils Teil der Durchdringungsöffnung 22, die einzelnen Abschnitte sind koaxial zur Rohrachse 35 ausgeführt, ohne die Erfindung hierauf zu beschränken, es können auch Abwinklungen, Querbohrungen oder ähnliches vorgesehen sein. Das Rohranschlussstück 2 ist zum Beispiel aus Guss, also aus Metall (zum Beispiel Stahl, Eisen, Edelstahl, Aluminium, Aluminiumlegierung), gefertigt, die Durchdringungsöffnung 22 wird geschickterweise in einem spanabhebenden Bearbeitungsschritt, beispielsweise mithilfe eines Stufenbohrers eingearbeitet.

In Fig. 2b ist gut zu erkennen, dass der Ringabsatz 23, welcher den ersten Bereich 201 der Ausnehmung 20 (welche auch das Innengewinde 21 trägt) begrenzt, eine bezüglich der Rohrachse 35 konzentrische Ringnut 51 aufweist, die mit der an dem Rohr 3 angeordneten Ringfeder 50 bei aktiver Schraubverbindung 4, also bei in das Rohranschlussstück 2 eingestecktem Rohr 3 und festgezogener Schraubverbindung 4, abdichtend zusammenwirkt.

Bevorzugt wird die Ringnut 51 durch einen zerspanenden Bearbeitungsschritt mit einem spanabhebenden Werkzeug aus dem metallischen Rohranschlussstück 2 herausgearbeitet.

Fig. 2a zeigt insbesondere den Rohrendbereich 30 des Rohrs 3. Der Rohrendbereich 30 ist zumindest der Bereich des Rohrs 3, der in das Rohranschlussstück 2 einsteht. Es kann sich aber auch verlängern. Der Rohrendbereich 30 kann sich aber auch auf den, aus der Ausnehmung 20 herausstehenden axialen Bereich der Befestigungsschraube erstrecken. Bei ausreichend enger Passung der Befestigungsschraube 40 auf dem Rohr 3 wirkt auch dieser unterstützend und stabilisierend. Daher schließt sich an den tatsächlich in das Rohranschlussstück 2 einstehenden Rohrabschnitt noch ein weiterer Bereich des Rohrs 3 an, der ebenfalls zu dem Rohrendbereich 30 alternativ zählt und durch den gestrichelten Bereich gezeigt ist.

Das Rohr 3 endet mit der Stirnseite 36, die Stirnseite 36 ist daher bei Einführen des Rohrs 3 in das Rohranschlussstück 2 der erste Teil des Rohrs 3, der in die Ausnehmung 20 eintaucht. In dem hier gezeigten Ausführungsbeispiel begrenzt die Stirnseite 36 den endseitigen Überstand 37 des Rohrs 3. Der Überstand 37 ist ein Bereich mit kleinerem Außendurchmesser als der Außendurchmesser des Rohrs 3 im übrigen, bei aktiver Rohrverbindung beziehungsweise aktiver Schraubverbindung ragt dieser Überstand 37 in den zweiten, mittleren Bereich 202 hinein.

Rohrseitig begrenzt wird der Überstand 37 durch die Ringfläche 33, die auch zu einer Ausweitung des Rohrdurchmessers führt, wobei die Ringfläche 33 gebildet wird durch eine radiale Einschnürung 32. Diese Ringfläche 33 trägt einen Teil der Dichtelemente, hier die Ringfeder 50, die, gut sichtbar, über die, bezogen auf die Rohrachse 35, senkrecht orientierte Ringfläche 33 in Einführrichtung 34 hervorsteht.

In Fig. 1 ist gut zu erkennen, wie die Ringfeder 50 in die Ringnut 51 eintaucht und die Ringfläche 33 fast auf dem Ringabsatz 23 des Rohranschlussstücks 2 aufliegt, es verbleibt auch gleichwohl ein Spalt, da die Anordnung ausdrücklich so gewählt ist, dass eine Berührung zwischen den Elementen des Rohrs 3 (hier die Ringfeder 50) und dem Rohranschlussstück 2 (hier die Ringnut 51) nur im Bereich der zusammenwirkenden Ringfeder und Ringnut erfolgt und so die Dichtebene beziehungsweise Dichtlinie festlegt.

Auf dem der Stirnseite 36 abgewandten Bereich der Einschnürung 32 schließt sich an die Ringfläche 33 ein Ringwulst 31 an. Dieser Ringwulst 31 wirkt einerseits zusammen mit der in die Umfangsnut 29 der Ausnehmung 20 einlegbaren Dichtung. Andererseits ist der Außendurchmesser des Ringwulstes 31 größer als der übrige Durchmesser des Rohrs 3, auf den die Befestigungsschraube 40 aufgesteckt ist.

Der Ringwulst 31 wird durch einen Kaltformprozess, einem Gesenkschmieden im Endbereich des Rohrs 3 auf dieses auf- oder eingearbeitet. Danach erfolgt eine spanabhebende Bearbeitung zum Herausarbeiten der exakten Ringfläche 33 (gegebenenfalls auch des Außendurchmessers des Ringwulstes 31) sowie der Ringfeder 50, die auf der (radialen) Ringfläche 33 angeordnet ist.

Der Ringwulst 31 bietet der Befestigungsschraube 40 in Einsteckrichtung 34 einen Anschlag 38. Bei der Montage der Rohrverbindung 1 wird das Rohr 3 in Einsteckrichtung 34 in das Rohranschlussstück 2 eingeführt, wobei das Außengewinde 42 der Befestigungsschraube 40 mit dem Innengewinde 21 zusammenwirkt. Die Befestigungsschraube 40 besitzt eine Durchdringungsöffnung 41, durch die es möglich ist, dass die Befestigungsschraube 40 auf das Rohr 3 aufgeschoben ist. Durch das Einschrauben der Befestigungsschraube 40 in das Innengewinde 21 erfährt die Befestigungsschraube 40 einen axialen Versatz in Einsteckrichtung 34, diese Einführbewegung wird über den Anschlag 38 auf den Ringwulst 31 und somit auf das Rohr 3 übertragen. Durch das Eindrehen der Befestigungsschraube 40 wird letztendlich eine axiale Kraft zwischen dem Rohr 3 und dem Rohranschlussstück 2 aufgebaut, die die Begrenzungsflächen der Ringfeder 50 in geeigneter Weise an die Nutwände der Ringnut 51 presst und so zuverlässig abdichtet.

Durch den verhältnismäßig langen Überlappungsbereich, also dem Bereich, bei dem das Rohr 3 in das Rohranschlussstück 2 einsteht, erfährt das Rohr 3 gerade an dem sensibeln Dichtungsbereich eine erheblich verbesserte Führung und lagestabile Unterstützung. Die Gefahr, dass Kippmomente zu einer Leckage gerade im Bereich des Rohrendes führt, wird erheblich reduziert.

Zusätzlich ist es möglich, im Überlappungsbereich zusätzliche Dichtungen anzuordnen.

Das Rohr 3 besteht bevorzugt aus Metall, zum Beispiel Guss-, Eisen- oder Stahllegierungen. Es kann auch aus Edelstahl oder Leichtmetall wie Aluminium oder deren Legierungen bestehen.

In Fig. 2c ist ein Detail aus Fig. 2b gezeigt. Insbesondere betrifft dieses Detail die Ausgestaltung der Ringnut 51 und zwar bezüglich ihrer Geometrie wie auch bezüglich der Lage der Ringnut 51 auf dem Ringabsatz 23. Erfindungsgemäß ist dabei vorgesehen, dass die Ringnut 51 ein Verhältnis von Nutbreite b zur Nuttiefe t von 4:1 bis 1:1, bevorzugt von 3,5:1 bis 1,5:1, insbesondere von 3:1 bis 2:1 aufweist. Die in die Ringnut 51 eintauchende Ringfeder besitzt eine dazu korrespondierende Ausgestaltung derart, dass die Ringfeder nicht satt, vollflächig mit seinen Begrenzungswänden an den Nutwänden anliegt, sondern nur in gewissen Bereichen, um so eine optimale Dichtung zu erreichen.

Die Ringnut 51 ist üblicherweise ein konzentrischer Ring (bezogen auf die Rohrachse 35) mit einer Innen- und einer Außenseite. Auf der Innenseite der Ringnut 51 (beziehungsweise Ringfeder 50) schließt sich auf dem Ringabsatz 23 ein Ring 200 an, wobei die Nutbreite b beziehungsweise die Federbreite zur Breite Rb des Rings 200 ein Verhältnis von 5:1 bis 1:1, bevorzugt von 3:1 bis 1:1, insbesondere bevorzugt von 2,5:1 bis 1,5:1 aufweist.

Je nach Größe, also nach Breite des Ringabsatzes 23 und der Ausgestaltung der Ringnut beziehungsweise Ringfeder kann der Ringabsatz 23 auch mehrere, zum Beispiel zwei oder drei konzentrisch angeordnete jeweils aus Ringnut und Ringfeder bestehende Dichtungsanordnungen aufweisen, die jeweils unterschiedliche Durchmesser besitzen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Rohrverbindung, bestehend aus einem Rohranschlussstück (2) und einem Rohr (3), dessen Endbereich (30) in eine Ausnehmung (20) des Rohranschlussstücks (2) einsteht und wobei das Rohr (3) und das Rohranschlussstück (2) durch eine Schraubverbindung (4) lösbar fest miteinander verbindbar sind, wobei in der Ausnehmung (20) an dem Rohranschlussstück (2) eine Ringnut (51) oder Ringfeder (50) vorgesehen ist, die mit einer an dem in dem Rohranschlussstück (2) einstehenden Rohrendbereich (30) angeordneten Ringfeder (50) oder Ringnut (51) bei insbesondere fest verbundener Schraubverbindung (4) abdichtend zusammenwirkt.

2. Rohrverbindung nach Anspruch 1, **dadurch gekennzeichnet, dass** als Schraubverbindung (4) eine auf dem Rohr (3) aufsteckbare, eine Durchdringungsöffnung (41) besitzende Befestigungsschraube (40) vorgesehen ist, die mit einem an der Ausnehmung (20) vorgesehenen Innengewinde (21) zusammenwirkt, wobei das Rohr (3), insbesondere der Rohrendbereich (30), eine Ringwulst (31) aufweist, an der die Befestigungsschraube (40) bei aktiver Schraubverbindung (4) anliegt und wobei die Schraubverbindung (4) eine axiale Kraft zwischen dem Rohranschlussstück (2) und dem Rohr (3) bewirkt.

3. Rohrverbindung nach einem oder beiden der vorhergehenden Ansprüche, **dadurch gekennzeichnet, dass** als Schraubverbindung (4) eine auf dem Rohr (3) oder dem Rohranschlussstück (2) aufgesteckte Überwurfmutter vorgesehen ist, wobei das Rohr (3) oder das Rohranschlussstück (2) ein mit dem Gewinde der Überwurfmutter zusammenwirkendes Außengewinde trägt, das Rohranschlussstück (2) oder das Rohr (3) einen Anlagewulst aufweist, an dem die Überwurfmutter bei aktiver Schraubverbindung (4) anliegt und die Schraubverbindung (4) eine axiale Kraft zwischen dem Rohranschlussstück (2) und dem Rohr (3) bewirkt.

4. Rohrverbindung nach einem oder mehreren der vorhergehenden Ansprüche, **dadurch gekennzeichnet, dass** als Schraubverbindung (4) auf dem Rohr (3) ein mit dem Innengewinde des Rohranschlussstücks (2) zusammenwirkendes Außengewinde vorgesehen ist.

5. Rohrverbindung nach einem oder mehreren der vorhergehenden Ansprüche, **dadurch gekennzeichnet, dass** der in die Ausnehmung (20) einstehende Ringwulst (31) eine Umfangsnut zur Anordnung oder Aufnahme einer Dichtung aufweist.

6. Rohrverbindung nach einem oder mehreren der vorhergehenden Ansprüche, **dadurch gekennzeichnet, dass** die Ausnehmung (20) einen Ringabsatz (23) aufweist, dessen Ringfläche (24) die Ringnut (51) oder die Ringfeder (50) trägt.

7. Rohrverbindung nach einem oder mehreren der vorhergehenden Ansprüche, **dadurch gekennzeichnet, dass** die Ausnehmung (20) eine das Rohranschlussstück (2) durchdringende Durchdringungsöffnung (22) bildet und die Durchdringungsöffnung (22) in Form einer Stufenbohrung den Ringabsatz (23) bildet.

8. Rohrverbindung nach einem oder mehreren der vorhergehenden Ansprüche, **gekennzeichnet durch** eine Umfangsnut (29) in der Zylinderwand (28) der Ausnehmung (20), die der Aufnahme einer Dichtung dient.

9. Rohrverbindung nach einem oder mehreren der vorhergehenden Ansprüche, **dadurch gekennzeichnet, dass** die das Rohrende abschließende ringartige Stirnfläche die Ringfeder (50) oder Ringnut (51) aufweist.

10. Rohrverbindung nach einem oder mehreren der vorhergehenden Ansprüche, **dadurch gekennzeichnet, dass** der Rohrendbereich (30) eine Einschnürung (32) aufweist, die eine zum Rohrende hin gerichtete Ringfläche (33) bildet, welche die Ringfeder (50) oder Ringnut (51) trägt.

11. Rohrverbindung nach einem oder mehreren der vorhergehenden Ansprüche, **dadurch gekennzeichnet, dass** sich an dem Rohrendbereich (30) an der Einschnürung (32) in Richtung des Rohrendes ein Rohrüberstand (37) anschließt.

12. Rohrverbindung nach einem oder mehreren der vorhergehenden Ansprüche, **dadurch gekennzeichnet, dass** die Ringnut (51) ein Verhältnis von Nutbreite (b) zur Nuttiefe (t) von 4:1 bis 1:1, bevorzugt von 3,5:1 bis 1,5:1, insbesondere von 3:1 bis 2:1 aufweist.

13. Rohrverbindung nach einem oder mehreren der vorhergehenden Ansprüche, **dadurch gekennzeichnet, dass** sich auf der Innenseite der Ringnut (51) beziehungsweise Ringfeder (50) ein Ring (200) anschließt, wobei die Nutbreite beziehungsweise Federbreite zur Breite (Rb) des Rings (200) ein Verhältnis von 5:1 bis 1:1, bevorzugt von 3:1 bis 1:1, insbesondere bevorzugt von 2,5:1 bis 1,5:1 aufweist.

14. Rohrverbindung nach einem oder mehreren der vorhergehenden Ansprüche, **dadurch gekennzeichnet, dass** das Rohranschlussstück (2) als Rohreinsteckstutzen ausgebildet ist.
